# EUROPÄISCHE PATENTSCHRIFT

(11) **EP 2 996 299 B1**
(45) Veröffentlichungstag und Bekanntmachung des Hinweises auf die Patenterteilung: **12.05.2021**
(21) Anmeldenummer: 14184752.5
(22) Anmeldetag: 15.09.2014
(51) Int. Cl.: H04L 29/06, H04W 12/06, H04W 12/12, G06Q 20/40, G07F 19/00, G06Q 20/10, G06Q 20/32, G06Q 20/34, H04B 5/00

(54) **Verfahren und Anordnung zur Autorisierung einer Aktion an einem Selbstbedienungssystem**
Method and assembly for authorising an action on a self-service system
Procédé et système d'autorisation d'une action sur un système auto-commandé

(43) Veröffentlichungstag der Anmeldung: 16.03.2016
(73) Patentinhaber: Wincor Nixdorf International GmbH, 33106 Paderborn (DE)
(72) Erfinder: Dr. Krummel, Volker, 33098 Paderborn (DE); Oberhellmann, Sascha, 49525 Lengerich (DE)

(56) Entgegenhaltungen:
- EP-A2- 2 602 738
- DE-A1-102011 015 318
- US-A- 5 354 974

## Beschreibung

Die Erfindung betrifft ein Verfahren und eine Anordnung zur Autorisierung einer Aktion an einem Selbstbedienungssystem (SB-System).

Moderne SB-Systeme wie z. B. Geldausgabeautomaten oder andere Geräte der Bankautomation beinhalten komplexe Schutzmechanismen gegen externe Angreifer. Für Service-Einsätze durch einen Service-Techniker ist es jedoch erforderlich, dass diese Schutzmechanismen zumindest teilweise ausgeschaltet werden. Dies ist beispielsweise dann notwendig, wenn durch einen Service-Techniker unvorhergesehene Software-Updates oder Hardware-Updates vorgenommen werden müssen.

Da SB-Systeme sehr unterschiedlich vernetzt sind, ist es üblich, eine Offline-Autorisation direkt am SB-System vorzunehmen. Hierzu erhält der Service-Techniker ein Techniker-Token, d. h. eine Hardware-Komponente zu seiner Identifizierung, wobei auf einem solchen Techniker-Token die Rechte des Service-Technikers für Service-Einsätze hinterlegt sind. Das SB-System prüft bei einem Technikereinsatz diese Rechte und reagiert entsprechend. Das Techniker-Token ist beispielsweise als USB-Stick mit eingebautem Flash-Speicher realisiert, welches in den USB-Port des System-PC's eingesteckt wird.

Eine solche Offline-Autorisation eines Service-Technikers ist jedoch mit Nachteilen versehen. Ein erster Nachteil besteht darin, dass eine Autorisation nur lokal gegenüber dem SB-System erfolgt. Ein verlässliches Logging von Service-Einsätzen und damit eine verlässliche Nachvollziehbarkeit sind damit nicht möglich. Ein zweiter Nachteil besteht darin, dass ein Zurückziehen von Rechten nur bedingt möglich ist. So weisen Techniker-Token üblicherweise lange Zeitfenster für die hinterlegten Rechte auf. Ein Zurückziehen von Rechten erfordert letztlich das Einsammeln des Techniker-Tokens, was mit praktischen Schwierigkeiten verbunden sein kann.

Ein weiterer Nachteil besteht darin, dass die Inhaber von SB-Systemen die USB-Ports solcher Systeme häufig für externe Komponenten schließen, um den Transfer von Schadsoftware über diesen Weg zu unterbinden. Für diesen Fall ist eine Offline-Autorisation von vornherein nicht möglich. Ein Nachteil einer Offline-Autorisation besteht des Weiteren darin, dass für den Fall, dass ein Service-Techniker direkt bedroht wird, keine Möglichkeit besteht, den Zugriff des Service-Technikers zu sperren oder unbemerkt ein Notsignal zu senden.

Aus der DE 10 2011 015 318 A1 ist ein Verfahren und System zur Sicherung einer Transaktion, insbesondere einer Transaktion an einem Geldautomaten, bekannt. Dabei führt ein Kunde zunächst seine Kundenkarte in einen Datenleser eines Geldautomaten ein und wird aufgefordert, seine persönliche Identifikationsnummer einzugeben. Zugleich werden von der Kundenkarte Kundendaten ausgelesen, welche zusammen mit der eingegebenen Identifikationsnummer über eine Datenverbindung an einen Server übermittelt werden. Nach erfolgreicher Überprüfung der eingegebenen Identifikationsnummer durch den Server wird von dem Server ein Freigabesignal an den Geldautomaten übermittelt, woraufhin der Kunde den gewünschten Geldbetrag abheben kann.

Die EP 2 602 738 A2 beschreibt einen Authentifizierungsprozess für ein Sicherheitstoken, beispielsweise zur Ermöglichung eines Technikereinsatzes an einem Geldautomaten, mit folgenden Schritten: 1. Einleiten des Datenaustauschs zwischen Token und einem Prüfsystem; 2. Identifikation des Tokens durch ein Lesegerät über eine eindeutige Identifikationsnummer des Tokens; 3. Vergleichen des von dem Token gelesenen Datensatzes durch das Prüfsystem mit lokalen Referenzdaten und dabei Authentifizierung des Tokens mittels Challenge-Response-Authentifizierung; 4. gegebenenfalls Vergleichen der lokalen Referenzdaten mit weiteren Referenzdaten von einem entfernten Server; 5. bei ungültigen Token: Abweisen weiterer Zugriffe durch das Prüfsystem; 6. zur Rückverfolgung der Authentifizierung: Übermittlung von Ereignisdaten des Prüfvorgangs zurück an den Server; und 7. Freigeben zulässiger Benutzung für den Träger des Tokens durch das Prüfsystem.

Der vorliegenden Erfindung liegt die Aufgabe zugrunde, ein Verfahren und eine Anordnung zur Autorisierung einer Aktion wie einer Transaktion oder eines Service-Einsatzes an einem Selbstbedienungssystem bereitzustellen, die in zuverlässiger Weise eine Online-Autorisation ermöglichen.

Diese Aufgabe wird erfindungsgemäß durch ein Verfahren mit den Merkmalen des Anspruchs 1 und eine Anordnung mit den Merkmalen des Anspruchs 13 gelöst. Ausgestaltungen der Erfindung sind in den Unteransprüchen angegeben.

Danach sieht das erfindungsgemäße Verfahren vor, mittels eines Autorisations-Servers einen Benutzer, insbesondere einen Service-Techniker dahingehend zu autorisieren, dass der Benutzer an einem SB-System eine Aktion, insbesondere einen Service-Einsatz durchführen kann. Hierzu ist der Benutzer mit einem Token ausgestattet. Hierbei handelt es sich um eine Hardware-Komponente beispielsweise in Form einer Chipkarte bzw. Smartcard. Auf dem Token sind benutzerspezifische Daten wie z. B. Name, Firmenzugehörigkeit und kryptographische Schlüssel zur Authentisierung und Verschlüsselung von Daten gespeichert. Der Zugriff auf die Funktion dieses Tokens ist mit einem Passwort gesichert.

Das erfindungsgemäße Verfahren sieht vor, dass durch das SB-System eine erste Nachricht erzeugt wird, wenn der Benutzer sich durch das Token gegenüber dem SB-System identifiziert hat. Hierzu steckt der Benutzer sein persönliches Token beispielsweise in einen Kartenleser des SB-Systems. Das SB-System speichert die erste Nachricht auf dem Token, wobei die erste Nachricht Daten zur Identifikation des Benutzers und Daten zur Identifikation des SB-Systems enthält. Zusätzlich kann vorgesehen sein, dass die erste Nachricht durch das SB-System digital signiert wird, beispielsweise unter Verwendung eines an sich bekannten digitalen Signaturverfahrens.

Im Weiteren wird die erste Nachricht vom Token auf den Autorisations-Server über mindestens eine Kommunikationsverbindung übertragen. Wie noch ausgeführt werden wird, kann diese Übertragung unter Zwischenschaltung eines Mobilfunkgerätes des Benutzers erfolgen. Anschließend wird beim Autorisations-Server unter Berücksichtigung der ersten Nachricht geprüft, ob die Aktion, insbesondere der Service-Einsatz durch den Benutzer am SB-System durchgeführt werden darf. Daraufhin wird eine zweite Nachricht beim Autorisations-Server erzeugt, die Daten darüber enthält, ob die Aktion durch den Benutzer am SB-System durchgeführt werden darf. Diese zweite Nachricht wird vom Autorisations-Server zum Token wiederum über mindestens eine Kommunikationsverbindung übertragen. Die am Token erhaltene zweite Nachricht wird dann durch das SB-System gelesen, beispielsweise, indem der Benutzer das Token wieder in den Kartenleser des SB-Systems einsteckt. Sofern die zweite Nachricht eine entsprechende Autorisierung enthält, erfolgt eine Zulassung des Benutzers durch das SB-System. Dabei kann vorgesehen sein, dass zur Durchführung der Aktion Schutzmechanismen des SB-Systems gegen externe Angreifer durch das SB-System zumindest teilweise deaktiviert werden.

Die erfindungsgemäße Lösung ermöglicht damit eine Fernauthentisierung eines Benutzers unter Verwendung eines Tokens und eines Autorisations-Servers. Insbesondere ermöglicht die erfindungsgemäße Lösung eine Fernauthentisierung eines Service-Technikers unter Verwendung eines Techniker-Tokens und eines Autorisations-Servers. Der Autorisations-Server steht beispielsweise unter Kontrolle des jeweiligen Service-Unternehmens oder der Institution, die das SB-System betreibt. Im Autorisations-Server kann zu jeder Zeit aktuell geprüft werden, ob ein bestimmter Service-Techniker dazu autorisiert ist, einen bestimmten Service-Einsatz an einem bestimmten SB-System durchzuführen. Die erfindungsgemäße Online-Autorisation vermeidet die mit einer Offline-Autorisation verbundenen Nachteile. Alternativ kann dieses Verfahren auch zur Authentifizierung einer Transaktion verwendet werden.

Das Token weist zwei Schnittstellen auf. Eine erste Schnittstelle dient dem Übertragen von Daten zwischen dem Token und dem SB-System. Eine zweite Schnittstelle dient dem Übertragen von Daten zwischen dem Token und einem weiteren Gerät, bei dem es sich beispielsweise um das Mobilfunkgerät des Benutzers handelt. Das Erzeugen der ersten Nachricht durch das SB-System umfasst dabei die Schritte des Einsteckens des Tokens in einen Token-Leser des SB-Systems, das Lesen von Identifikationsdaten des Tokens über die erste Schnittstelle des Tokens und das Übertragen der ersten Nachricht vom SB-System auf das Token über die erste Schnittstelle.

Eine weitere Ausgestaltung der Erfindung sieht vor, dass das Übertragen der ersten Nachricht vom Token auf den Autorisations-Server folgende Schritte umfasst. Die erste Nachricht wird in einem ersten Schritt vom Token zu einem Mobilfunkgerät des Benutzers übertragen. Dies erfolgt beispielsweise über die erwähnte zweite Schnittstelle des Tokens. Das Mobilfunkgerät des Benutzers ist mit einer entsprechenden Kommunikations-Schnittstelle versehen, so dass es die erste Nachricht vom Token empfangen kann. Beispielsweise ist die zweite Schnittstelle des Tokens als NFC-Schnittstelle ausgebildet, so dass die erste Nachricht mittels NFC-Technologie zum Mobilfunkgerät übertragen, wobei im Mobilfunkgerät ebenfalls eine NFC-Schnittstelle implementiert ist. In einem zweiten Schritt wird die erste Nachricht vom Mobilfunkgerät zum Autorisations-Server übertragen. Hierzu stellt das Mobilfunkgerät eine Kommunikationsverbindung zum Autorisations-Server her, über die die erste Nachricht übertragen werden kann. Eine solche Kommunikationsverbindung kann in üblicher Weise erfolgen, beispielsweise über ein Funknetz und das Internet und/oder ein Festnetz.

Dabei kann vorgesehen sein, dass das Mobilfunkgerät des Benutzers oder Service-Technikers als Smartphone ausgebildet ist und eine Applikation ("App") enthält, die das Herstellen einer Kommunikationsverbindung zwischen dem Mobilfunkgerät und dem Autorisations-Server und das Übertragen der ersten Nachricht zum Autorisations-Server steuert.

Eine weitere Ausgestaltung der Erfindung sieht vor, dass vor Erzeugen der zweiten Nachricht beim Autorisations-Server das Mobilfunkgerät und der Autorisations-Server und/oder das Token und der Autorisations-Server eine gegenseitige Authentisierung durchführen. Eine solche Authentisierung umfasst dabei die Eingabe eines dem Token zugeordneten Passworts am Mobilfunkgerät und/oder am SB-System durch den Benutzer. Dadurch, dass der Benutzter das Passwort am Mobilfunkgerät eingeben und dementsprechend kennen muss, wird verhindert, dass eine nicht autorisierte Person, die aus irgendwelchen Gründen über das Token verfügt, eine Authentisierung erreichen kann.

Eine weitere Ausgestaltung der Erfindung sieht vor, dass die zweite Nachricht durch den Autorisations-Server kryptografisch geschützt wird, insbesondere um einen Schutz gegenüber Manipulationen und ein eventuelles Wiedereinspielen zu verhindern. Wiedereinspielen bedeutet dabei, dass ein Angreifer gültige Nachrichten aus alten Protokollabläufen in andere Protokollabläufe überträgt, z.B. um eine alte gültige Erlaubnis unerlaubt wieder zu verwenden. Beispielsweise könnte ein Angreifer versuchen, eine korrekt signierte Nachricht eines Technikereinsatzes vom Vortag dazu zu verwenden, Rechte an einem SB-System zu erlangen. Da die Signatur des Service-Technikers immer noch gültig ist, sind hier besondere Maßnahmen zu ergreifen. Durch einen kryptografischen Schutz der zweiten Nachricht wird ein Schutz gegen ein solches Wiedereinspielen bereitgestellt, da ein neuer, aktueller kryptografischer Vorgang erfolgt.

Die zweite Nachricht wird vom Autorisations-Server zum Token gemäß einer Ausgestaltung derart übertragen, dass zunächst eine Übertragung zum Mobilfunkgerät des Benutzers erfolgt. Anschließend erfolgt die Übertragung vom Mobilfunkgerät des Benutzers zum Token, wiederum über die schon erwähnte zweite Schnittstelle des Tokens.

Eine weitere Ausgestaltung der Erfindung sieht vor, dass das Token zusätzlich zu einem regulären Passwort ein Notfall-Passwort enthält und im Falle dessen Mitteilung an den Autorisations-Server durch den Benutzer der Autorisations-Server mindestens eine zusätzliche Maßnahme vornimmt oder veranlasst. Eine solche zusätzliche Maßnahme ist beispielsweise das Benachrichtigen der Polizei oder die Aktivierung einer erweiterten Überwachungstechnik, um einen potentiellen Täter besser identifizieren zu können. Wenn also beispielsweise der Benutzer, insbesondere ein Service-Techniker durch einen Täter bedroht wird, kann er statt des regulären Passworts das Notfall-Passwort eingeben, wenn der Autorisations-Server und das Mobilfunkgerät bzw. das Token eine gegenseitige Authentisierung durchführen. Für den Täter ist dies nicht erkennbar, da er keines der beiden Passwörter kennt.

Dabei kann in einer Ausgestaltung vorgesehen sein, dass das Notfall-Passwort eine Variante des originalen Passworts darstellt. Hierzu kann beispielsweise vorgesehen sein, dass das Notfall-Passwort aus dem Original-Passwort durch eine einfache Transformationsregel gebildet wird. Eine solche Transformationsregel ist z. B. die Addition oder Subtraktion einer bestimmten Zahl wie z.B. der Zahl 1 oder das Hinzufügen von einem oder mehreren Zeichen. Der Vorteil in der Verwendung einer Variante des originalen Passworts besteht darin, dass dadurch leichter sichergestellt werden kann, dass dem Benutzer oder Service-Techniker das selten verwendete Notfall-Passwort im Notfall auch einfällt.

Eine weitere Ausgestaltung der Erfindung sieht vor, dass der Autorisations-Server prüft, ob Hinweise auf eine missbräuchliche Nutzung des Verfahrens vorliegen. Für diesen Fall sendet der Autorisations-Server eine Deaktivierungs-Nachricht an das Token, worauf sich das Token dauerhaft deaktiviert. Ein Hinweis auf eine missbräuchliche Nutzung besteht beispielsweise in dem Empfang eines Notfall-Passworts gemäß dem eben erläuterten Ausführungsbeispiel. Der Autorisations-Server ist somit in der Lage, falls notwendig eine Deaktivierungs-Nachricht an das Token zu senden. Nachdem sich das Token deaktiviert hat, kann es nicht für weitere Techniker-Authentisierungen eingesetzt werden.

Die vorliegende Erfindung betrifft auch eine Anordnung zur Autorisierung einer Aktion an einem SB-System. Die Anordnung umfasst ein SB-System, ein Token eines Benutzers, insbesondere eines Service-Technikers und einen Autorisations-Server. Die Anordnung umfasst die folgenden Merkmale:
- das SB-System ist dazu eingerichtet, eine ersten Nachricht zu erzeugen, wenn der Benutzer sich durch das Token gegenüber dem SB-System identifiziert hat, und die erste Nachricht auf dem Token zu speichern, wobei die erste Nachricht Daten zur Identifikation des Benutzers und des SB-Systems enthält,
- das Token ist dazu eingerichtet, die erste Nachricht über eine Kommunikationsverbindung zu übertragen,
- der Autorisations-Server ist dazu eingerichtet, die erste Nachricht über eine Kommunikationsverbindung zu empfangen,
- der Autorisations-Server ist ferner dazu eingerichtet, unter Berücksichtigung der ersten Nachricht zu prüfen, ob die Aktion durch den Benutzer am SB-System durchgeführt werden darf,
- der Autorisations-Server ist ferner dazu eingerichtet, eine zweite Nachricht zu erzeugen und die zweite Nachricht über eine Kommunikationsverbindung zu übertragen, wobei die zweite Nachricht Daten darüber enthält, ob die Aktion durch den Benutzer am SB-System durchgeführt werden darf, und
- das SB-System ist ferner dazu eingerichtet, die zweite Nachricht zu lesen und eine Aktion zuzulassen, sofern die zweite Nachricht eine entsprechende Autorisierung enthält.

Gemäß einer Ausgestaltung umfasst die Anordnung des Weiteren ein Mobilfunkgerät, wobei das Token dazu eingerichtet ist, die erste Nachricht zu dem Mobilfunkgerät des Benutzers zu übertragen, das Mobilfunkgerät dazu eingerichtet ist, die erste Nachricht zum Autorisations-Server zu übertragen, der Autorisations-Server dazu eingerichtet ist, die zweite Nachricht zum Mobilfunkgerät des Benutzers zu übertragen, und das Mobilfunkgerät ferner dazu eingerichtet ist, die zweite Nachricht zum Token zu übertragen.

Die Erfindung wird nachfolgend unter Bezugnahme auf die Figuren der Zeichnung anhand mehrerer Ausführungsbeispiele näher erläutert. Es zeigen:
Figur 1 schematisch eine Anordnung zur Autorisierung eines Service-Einsatzes an einem SB-System, die ein SB-System, ein Token, ein Mobilfunkgerät und einen Autorisations-Server umfasst; und
Figur 2 ein Ausführungsbeispiel eines Verfahrensablaufs zur fernauthentisierten Wartung eines SB-Systems.

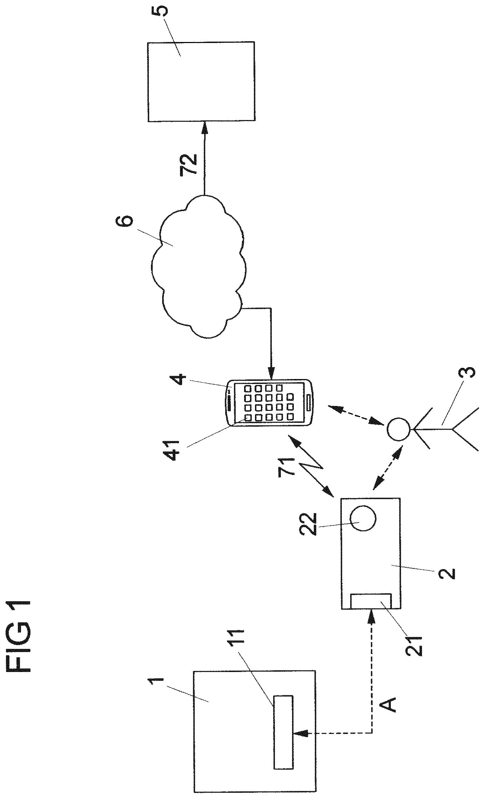

Die Figur 1 zeigt ein Ausführungsbeispiel einer Anordnung zur Autorisierung eines Service-Einsatzes an einem SB-System. Die Anordnung umfasst ein SB-System 1, ein Token 2, ein Mobilfunkgerät 4 eines Service-Technikers 3 und einen Autorisations-Server 5.

Das SB-System 1 kann grundsätzlich ein beliebiges Selbstbedienungssystem sein, das in der Bank- und Dienstleistungsautomation Einsatz findet. Beispielsweise kann es sich um einen Geldausgabeautomaten, einen Kontoauszugsdrucker, einen Automaten zur Zutrittskontrolle oder einen in Post- und Logistiklösungen eingesetzten Automaten handeln.

Das Token 2 ist im dargestellten Ausführungsbeispiel als Chipkarte ausgebildet. Alternativ kann das Token 2 auch durch eine andere Hardwarekomponente wie beispielsweise einen USB-Stick realisiert sein. Grundsätzlich ist es auch möglich, dass Token 2 als Software-Token auszubilden und dabei beispielsweise in das Mobilfunkgerät 4 zu integrieren.

Das Token 2 umfasst zwei Schnittstellen, eine erste Schnittstelle 21 zur Kommunikation mit dem SB-System 1 und eine zweite Schnittstelle 22 zur Kommunikation mit dem Mobilfunkgerät 4. Zum Übertragen von Daten zwischen dem SB-System 1 und dem Token 2 wird das Token 2 in einen Kartenleser 11 des SB-Systems 1 eingesteckt (vgl. Pfeil A der Figur 1), wobei über die Schnittstelle 21 Daten übertragen werden. Alternativ kann die Schnittstelle auch als Nahbereichsfunkschnittstelle ausgebildet sein.

Die zweite Schnittstelle 22 des Tokens 2 kann als Funkschnittstelle ausgebildet sein. Dies kann dabei als Nahbereichsfunkschnittstelle ausgebildet sein. Sie wird beispielsweise durch eine NFC-Schnittstelle realisiert (NFC = "Near Field Communication" = Nahfeldkommunikation). Das mit zwei Schnittstellen 21, 22 versehene Token 2 kann auch als "Dual-Interface-Token" (DIT) bezeichnet werden. Alternativ kann auch eine andere Technologie für die Nahbereichsfunkschnittstelle wie z.B. WLAN, Bluetooth, Bluetooth Low Energy, Bluetooth Low Energy iBeacon-Technology, RFID und/oder ZigBee verwendet werden. In einer anderen Ausführungsform ist die zweite Schnittstelle als Kontaktverbindung oder drahtgebundene Schnittstelle ausgebildet.

In einer alternativen Ausführungsform kann der Token 2 ein Bestandteil des Mobilfunkgerätes 4 sein. Insbesondere kann ein sicherer Bereich in dem Mobilfunkgerät 4 implementiert sein in Form eines speziellen Bausteines. In diesem Beispiel ist die erste Schnittstelle als eine Nahbereichsfunkschnittstelle ausgestaltet und ermöglicht somit ein Zugriff von und zu dem SB-System 1. Die zweite Schnittstelle ist dann als eine interne drahtgebundene Schnittstelle in dem Mobilfunkgerät 4 ausgebildet und wird für die Kommunikation zu den anderen Modulen in dem Mobilfunkgerät 4 verwendet.

Das Mobilfunkgerät 4 dient der Kommunikation zum einen mit dem Token 2 und zum anderen mit dem Autorisations-Server 5. Dementsprechend weist das Mobilfunkgerät 4 neben einer üblichen Mobilfunk-Schnittstelle zusätzlich eine Schnittstelle zur Kommunikation mit dem Token 2 über dessen Schnittstelle 22 auf. Sofern die Schnittstelle 22 als NFC-Schnittstelle ausgebildet ist, besitzt das Mobilfunkgerät 4 dementsprechend ebenfalls eine NFC-Schnittstelle, so dass eine Kommunikationsverbindung 71 aufgebaut werden kann. Alternativ unterstützt das Mobilfunkgerät 4 eine oder mehrere der alternativen Technologien.

Das Mobilfunkgerät 4 kann des Weiteren eine Kommunikationsverbindung 72 zu dem Applikations-Server 5 aufbauen. Dies erfolgt in herkömmlicher Weise über ein Mobilfunknetz 6 und ggf. weitere Netze wie z. B. das Internet und/oder ein Telekommunikations-Festnetz. Auch kann die Verbindung vom Mobilfunkgerät 4 zum Applikations-Server 5 beispielsweise über ein lokales Funknetz (WLAN) und mit diesem verbundene weitere Netze erfolgen.

Das Mobilfunkgerät 4 ist beispielsweise als Smartphone ausgebildet und weist für diesen Fall eine Mehrzahl von Software-Applikationen auf. Es ist vorgesehen, dass eine dieser Software-Applikationen 41 dazu eingerichtet ist, das Herstellen einer Kommunikationsverbindung 72 zwischen dem Mobilfunkgerät 4 und dem Autorisations-Server 5 sowie das Übertragen von Nachrichten zwischen dem Mobilfunkgerät 4 und dem Autorisations-Server 5 zu steuern.

Sowohl das Token 2 als auch das Mobilfunkgerät 4 sind dem Service-Techniker 3 zugeordnet. Dementsprechend umfasst das Token 2 technikerspezifische Daten wie z. B. Name und Firmenzugehörigkeit des Service-Technikers sowie ggf. kryptografische Schlüssel zur Authentisierung und Verschlüsselung von Daten. Der Zugriff auf die Funktionen des Tokens 2 ist durch ein Passwort gesichert, das der Service-Techniker 3 kennt. Das Mobilfunkgerät 4 ist ebenfalls dem Service-Techniker zugeordnet, so dass dieser sich gegenüber dem Mobilfunkgerät 4 mit einer PIN identifizieren kann.

Der Autorisations-Server 5 besitzt Informationen im Hinblick auf eine Vielzahl von SB-Systemen und Service-Technikern. Beispielsweise laufen beim Autorisations-Server 5 Informationen dahingehend zusammen, welche SB-Systeme welche Schutzmechanismen gegen einen nicht-autorisierten Zugriff aufweisen und welche dieser Schutzmechanismen im Falle eines Service-Einsatzes durch einen Service-Techniker zu deaktivieren sind. Weiter laufen beim Autorisations-Server Informationen dahingehend zusammen, welche Service-Techniker an welchen SB-Systemen welche Service-Einsätze durchführen dürfen. Der Autorisations-Server 5 enthält des Weiteren kryptografische Schlüssel zur Authentisierung und Verschlüsselung von Daten sowie die Passwörter der ausgegebenen Token 2.

Insbesondere kann vorgesehen sein, dass der Autorisations-Server 5 die folgenden Informationen über die SB-Systeme und die Service-Techniker bzw. deren Token gespeichert hat, damit eine Authentifizierung erfolgen kann und/oder Statusinformationen nachverfolgt werden können:
- Informationen zum eindeutigen Identifizieren eines Service-Technikers, insbesondere Name, Dienststelle, Personalnummer, etc.;
- Informationen zum aktuellen Status und zu den eingeräumten Rechten, z.B. über Rechte des Service-Technikers zum Warten bestimmter Geräteklassen oder spezifischer Geräte;
- Informationen über den Schulungsstand eines Service-Technikers, woraus sich z.B. ergibt, ob ein Service-Techniker eine geplante Service-Maßnahme grundsätzlich ausführen kann;
- Informationen über aktuelle Wartungsaufträge;
- Informationen über den Status des Service-Technikers, z.B. darüber, ob der Service-Techniker aktiv ist, gesperrt ist (ggf. bis zu einem bestimmten Datum), das Unternehmen verlassen, etc.;
- Informationen über das Token des Technikers, insbesondere Seriennummer und Statusinformationen. Die Statusinformationen geben beispielsweise an, ob ein Token als gestohlen oder verloren gemeldet ist, ob ein Token in einem Angriff missbraucht wurde, etc.; und
- Informationen, die zum Authentisieren verwendet werden wie z.B. Zertifikat(e).

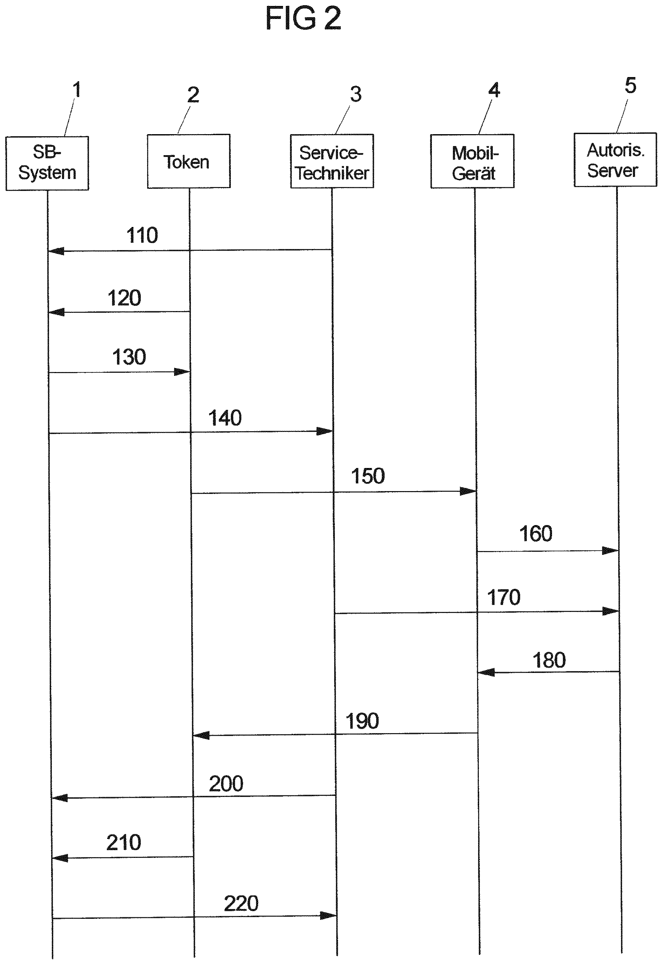

Ein Ausführungsbeispiel eines Verfahrensablaufs zur Autorisierung eines Service-Einsatzes an einem SB-System wird im Folgenden anhand der Figur 2 erläutert.

In einem ersten Schritt 110 steckt der Service-Techniker 3 sein persönliches Token 2, dessen Passwort er kennt, in den Kartenleser 11 (vgl. Fig. 1) des SB-Systems 1. Durch das Token 2 authentisiert sich der Service-Techniker gegenüber dem SB-System 1. Diese Authentisierung umfasst, dass durch den Service-Techniker die Eingabe eines Passworts des Tokens 2, also eine PIN-Eingabe erfolgt. Hierbei kann es sich um das reguläre Passwort des Tokens 2 oder in einer Ausführungsvariante alternativ um ein Notfall-Passwort handeln, auf das noch näher eingegangen werden wird. Das Token 2 entscheidet dann, ob das weitere Protokoll a) abgebrochen wird, da die PIN-Eingabe falsch war, b) normal fortgesetzt, da die PIN-Eingabe korrekt war, oder c) der Notfall-Modus aktiviert wird, da eine Notfall-PIN eingegeben wurde.

Bei der Authentisierung des Service-Technikers gegenüber dem SB-System 1 liest das SB-System zumindest Daten zur Identifikation des Service-Technikers 3 aus, vgl. Schritt 120, wobei diese Kommunikation durch eine Nachricht von dem SB-System zu dem Token 2 gestartet wird. Dabei findet eine gegenseitige Identifikation und Authentisierung des SB-Systems 1 und des Tokens 2 statt, so dass beide Seiten wissen, dass sie mit vertrauenswürdigen Instanzen sprechen. Beispielsweise erfolgt die Kommunikation zwischen SB-System 1 und Token 2 durch eine bidirektionale "Challenge-Response-Verbindung".

Anschließend generiert das SB-System 1 in Schritt 130 eine erste Nachricht, die die erfassten Daten zur Identifikation des Service-Technikers 3 und zusätzlich Daten zur Identifikation des SB-Systems 1 umfasst. Diese erste Nachricht wird in Schritt 130 auf das Token 2 übertragen und dort gespeichert. Die entsprechende Kommunikation erfolgt über die erste Schnittstelle 21 des Tokens 2 (vgl. Fig. 1).

Weiter kann vorgesehen sein, dass das SB-System 1 die erste Nachricht digital signiert. Eine solche digitale Signatur kann unter Verwendung eines digitalen Signaturverfahrens erfolgen, beispielsweise mit Hilfe eines geheimen Signaturschlüssels, der auf dem SB-System 1 gespeichert ist. Die erste Nachricht kann weitere Informationen enthalten, z.B. einen Zeitstempel, Positionsinformationen und/oder eine aktuelle photographische Aufnahme des Raums, in dem sich das SB-System 1 befindet. Positionsinformationen erlauben beispielsweise einen Vergleich der Position des SB-Systems mit der GPS Position des Mobilfunkgeräts des Service-Technikers. Stimmen diese beiden Positionen nicht überein, stellt dies einen Hinweis auf einen Missbrauch dar.

Im Folgenden entnimmt der Service-Techniker 3 in Schritt 140 das Token 2 vom SB-System 1. Er stellt nun mit Hilfe seines Mobilfunkgeräts 4 eine Verbindung zwischen dem Token 2 und dem Autorisations-Server 5 her. Dies erfolgt in zwei Schritten. In einem ersten Schritt 150 wird eine Kommunikationsverbindung zwischen dem Token 2 und dem Mobilfunkgerät 4 hergestellt. Dies erfolgt über die Schnittstelle 22 des Tokens 2 und eine entsprechende Schnittstelle im Mobilfunkgerät 4. Im Falle einer NFC-Schnittstelle hält der Service-Techniker 3 das Token 2 an das Mobilfunkgerät 3, so dass die erste Nachricht an das Mobilfunkgerät 3 übertragen werden kann.

In einem zweiten Schritt 160 baut das Mobilfunkgerät 4 eine Kommunikationsverbindung mit dem Autorisations-Server 5 auf. Dies erfolgt beispielsweise über die in Bezug auf Figur 1 erwähnte Applikation 41 auf dem Mobilfunkgerät 4. Nach Aufbau der Verbindung wird die erste Nachricht zum Autorisations-Server 5 übertragen. Vor und/oder nach Übertragen der ersten Nachricht führen das Token 2 und der Autorisierungs-Server 5 eine gegenseitige Authentisierung durch. Eine solche kann über ein Authentifizierungsprotokoll, beispielsweise das "Challenge Handshake Authentication Protocol" (CHAP) erfolgen. Die gegenseitige Authentisierung erfolgt über die beiden Kommunikationsverbindungen 71, 72 (vgl. Fig. 1) und Zwischenschaltung des Mobilfunkgeräts 4. Dabei kann vorgesehen sein, dass auch das Mobilfunkgerät 4 Authentisierungsinformationen gegenüber dem Autorisations-Server 5 bereitstellt.

Im Rahmen der gegenseitigen Authentisierung ist vorgesehen, dass der Service-Techniker 3 in einem Schritt 170 die Eingabe des Passworts des Tokens 2 am Mobilfunkgerät 4 vornehmen muss. Hierzu ergeht beispielsweise eine entsprechende Aufforderung des Autorisations-Servers 5 an das Mobilfunkgerät 4, die die Applikation 41 anzeigt. Diese Maßnahme stellt eine zusätzliche Sicherheit insofern bereit, als verhindert wird, dass eine nicht-autorisierte Person, die im Besitz des Tokens 2 ist, authentifiziert werden kann. Einer solchen nicht-autorisierten Person wäre das Passwort des Tokens 2 nicht bekannt. Alternativ kann die Applikation 41 konfiguriert sein, dass eine entsprechende Aufforderung direkt generiert wird, ohne dass der Autorisations-Servers 5 dies auffordert.

Der Autorisations-Server 5 prüft nun anhand der ersten Nachricht und der im Autorisations-Server gespeicherten oder verfügbaren Informationen, ob der Technikereinsatz am SB-System 1 durch den Service-Techniker 3 durchgeführt werden darf. Hierzu erzeugt er eine zweite Nachricht, die in Schritt 180 über die Kommunikationsverbindung 72 auf das Mobilfunkgerät 4 übertragen wird. Vom Mobilfunkgerät 4 wird die zweite Nachricht dann über die Kommunikationsverbindung 71 zum Token 2 übertragen. Dabei kann vorgesehen sein, dass die zweite Nachricht im Autorisations-Server 5 kryptografisch gegen Manipulation und Wiedereinspielen geschützt wird.

In Schritt 200 steckt der Service-Techniker das Token 2, das nun die zweite Nachricht des Autorisations-Servers 5 enthält, wieder in den Kartenleser 11 des SB-Systems ein. Das SB-System 1 hat somit Zugriff auf die zweite Nachricht des Autorisations-Servers 5 und kann diese über die Schnittstelle 21 auslesen, Schritt 210. Hat nun der Autorisations-Server 5 den Zugriff autorisiert, so wird der Service-Einsatz zugelassen. Hierzu ist beispielsweise vorgesehen, dass bestimmte oder sämtliche Schutzmechanismen, die das SB-System 1 im Normalfall gegen externe Angriffe und Manipulationen schützen, deaktiviert werden. Das Deaktivieren dieser Schutzmechanismen erfolgt nur für die Dauer des Service-Einsatzes. Sofern der Autorisations-Server 5 den Service-Einsatz nicht zugelassen hat, wird der Service-Einsatz verwehrt.

Abschließend entnimmt der Service-Techniker 3 das Token 2 aus dem SB-System, Schritt 220.

Der beschriebene Verfahrensablauf kann erweitert werden, um Notsituationen wie einer persönlichen Bedrohung eines Service-Technikers durch einen Täter, der unberechtigten Zugriff zu dem SB-System 1 erhalten will, zu begegnen. Hierzu sieht eine Ausgestaltung des beschriebenen Verfahrens vor, dass jedem Token 2 neben einem regulären Passwort ein so genanntes Notfall-Passwort zugeordnet wird. Der Service-Techniker 3 kennt beide Passwörter. Dieses Notfall-Passwort wird wie das korrekte Passwort im Protokollablauf akzeptiert, signalisiert dem Autorisations-Server 5 aber den Notfall des Technikers. Insbesondere, wenn der Service-Techniker im Schritt 170 der Figur 2 statt des regulären Passworts das Notfall-Passwort eingibt, so wird hierdurch dem Autorisations-Server 5 ein Notfall signalisiert. Die Eingabe des Notfall-Passworts kann beispielsweise auch erfolgen, wenn der Service-Techniker sich durch eine PIN-Eingabe gegenüber dem SB-System 1 authentisiert, vgl. Schritt 110, 120 der Fig. 2. Der Autorisations-Server 5 kann nun bestimmte Maßnahmen vornehmen oder veranlassen, z. B. die Polizei benachrichtigen oder eine erweiterte Überwachungstechnik in dem Raum, in dem das SB-System 1 aufgestellt ist, aktivieren, so dass der Täter leichter identifizierbar ist.

Als weitere Sicherheitsmaßnahme kann vorgesehen sein, dass der Autorisations-Server 5 in der Lage ist, eine Deaktivierungsnachricht an das Token 2 zu senden. Eine solche Deaktivierungsnachricht wird ausgesandt, wenn dem Autorisations-Server 5 Hinweise auf einen Notfall oder eine missbräuchliche Nutzung des Tokens 2 vorliegen. Ein solcher Notfall wird beispielsweise durch das erwähnte Notfall-Passwort indiziert. Nach Erhalt der Deaktivierungsnachricht beim Token 2 prüft dieses die Nachricht und deaktiviert sich ggf. dauerhaft. Für einen Außenstehenden ist es dabei nicht unterscheidbar, ob es sich um eine reguläre Nachricht des Autorisations-Servers 5 oder um eine Deaktivierungsnachricht handelt. Alternativ kann vorgesehen sein, dass nach Erhalt der Deaktivierungsnachricht beim Token 2 diese Nachricht das Token 2 derart modifiziert, dass beim Einführen des Token 2 in den Kartenleser 11 dieses als "missbräuchlich benutztes Token" identifiziert und durch das SB-System 1 eingezogen bzw. durch den Kartenleser dauerhaft deaktiviert wird.

Die Erfindung beschränkt sich in ihrer Ausgestaltung nicht auf die vorstehend beschriebenen Ausführungsbeispiele. Beispielsweise kann vorgesehen sein, dass eine Kommunikation zwischen dem Token 2 und dem Mobilfunkgerät 4 in anderer Weise als über eine Funkschnittstelle erfolgt, z.B. das Token 2 ebenfalls über einen Kartenleser am Mobilfunkgerät 4 einsteckbar ist. Für diesen Fall muss das Token 2 mit nur einer Schnittstelle ausgestattet werden.

## Patentansprüche

1. Verfahren zur Autorisierung einer Aktion an einem Selbstbedienungssystem (SB-System), bei dem ein Benutzer (3) unter Verwendung eines Autorisations-Servers (5) dazu autorisiert wird, an einem SB-System (1) eine Aktion durchzuführen, wobei der Benutzter (3) mit einem Token (2) zu seiner Identifikation ausgestattet ist,
**dadurch gekennzeichnet, dass**
das Verfahren folgende Schritte umfasst:
- Erzeugen einer ersten Nachricht durch das SB-System (1), wenn der Benutzer (3) sich durch das Token (2) gegenüber dem SB-System (1) identifiziert hat, und Speichern der ersten Nachricht auf dem Token (2), wobei die erste Nachricht Daten zur Identifikation des Benutzers (3) und des SB-Systems (1) enthält, wobei das Erzeugen der ersten Nachricht durch das SB-System (1) die Schritte umfasst: Einstecken des Tokens (2) in einen Token-Leser (11) des SB-Systems (1), Lesen von Identifikationsdaten des Tokens (2) über eine erste Schnittstelle (21) des Tokens (2) und Übertragen der ersten Nachricht vom SB-System (1) auf das Token (2) über die erste Schnittstelle (21),
- Übertragen der ersten Nachricht vom Token (2) über eine zweite Schnittstelle (22) auf ein weiteres Gerät (4), welches die erste Nachricht auf den Autorisations-Server (5) überträgt
- Prüfen beim Autorisations-Server (5) unter Berücksichtigung der ersten Nachricht, ob die Aktion durch den Benutzer (3) am SB-System (1) durchgeführt werden darf,
- Erzeugen einer zweiten Nachricht beim Autorisations-Server (5) und Übertragen der zweiten Nachricht vom Autorisations-Server (5) zum Token (2), wobei die zweite Nachricht Daten darüber enthält, ob die Aktion durch den Benutzer (3) am SB-System durchgeführt werden darf,
- Lesen der zweiten Nachricht durch das SB-System (1) und Zulassen der Aktion durch das SB-System (1), sofern die zweite Nachricht eine entsprechende Autorisierung enthält.

2. Verfahren nach Anspruch 1, **dadurch gekennzeichnet, dass** die erste Nachricht vom SB-System (1) digital unterzeichnet wird.

3. Verfahren nach einem der vorangehenden Ansprüche, **dadurch gekennzeichnet, dass** das Übertragen der ersten Nachricht vom Token (2) auf den Autorisations-Server (5) die Schritte umfasst:
- Übertragen der ersten Nachricht vom Token (2) zu einem Mobilfunkgerät (4) des Benutzers (3), und
- Übertragen der ersten Nachricht vom Mobilfunkgerät (4) zum Autorisations-Server (5).

4. Verfahren nach Anspruch 3, **dadurch gekennzeichnet, dass** das Übertragen der ersten Nachricht vom Token (2) zum Mobilfunkgerät (4) des Benutzers über die zweite Schnittstelle (22) des Tokens (2) erfolgt.

5. Verfahren nach Anspruch 4, **dadurch gekennzeichnet, dass** die zweite Schnittstelle (22) des Tokens (2) eine NFC-Schnittstelle ist und die erste Nachricht über NFC-Technologie zum Mobilfunkgerät (4) übertragen wird.

6. Verfahren nach einem der vorangehenden Ansprüche, **dadurch gekennzeichnet, dass** vor Erzeugen der zweiten Nachricht beim Autorisations-Server (5) das Mobilfunkgerät (4) und der Autorisations-Server (5) und/oder das Token (2) und der Autorisations-Server (5) eine gegenseitige Authentisierung durchführen, die die Eingabe eines dem Token (2) zugeordneten Passworts am Mobilfunkgerät (4) und/oder am SB-System umfasst.

7. Verfahren nach einem der vorangehenden Ansprüche, **dadurch gekennzeichnet, dass** die zweite Nachricht durch den Autorisations-Server (5) kryptographisch geschützt wird.

8. Verfahren nach einem der vorangehenden Ansprüche, soweit rückbezogen auf Anspruch 3, **dadurch gekennzeichnet, dass** das Übertragen der zweiten Nachricht vom Autorisations-Server (5) zum Token (2) die Schritte umfasst:
- Übertragen der zweiten Nachricht vom Autorisations-Server (5) zum Mobilfunkgerät (4) des Benutzers, und
- Übertragen der zweiten Nachricht vom Mobilfunkgerät (4) des Benutzers zum Token (2).

9. Verfahren nach einem der vorangehenden Ansprüche, **dadurch gekennzeichnet, dass** das Lesen der zweiten Nachricht durch das SB-System (1) das Einstecken des mit der zweiten Nachricht versehenen Tokens (2) in einen Token-Leser (11) des SB-Systems (1) umfasst.

10. Verfahren nach einem der vorangehenden Ansprüche, **dadurch gekennzeichnet, dass** das Token (2) zusätzlich zu einem regulären Passwort ein Notfall-Passwort enthält und im Falle dessen Mitteilung an den Autorisations-Server (5) durch den Benutzer (3) der Autorisations-Server (5) mindestens eine zusätzliche Maßnahme vornimmt oder veranlasst.

11. Verfahren nach einem der vorangehenden Ansprüche, **dadurch gekennzeichnet, dass** der Autorisations-Server (5) prüft, ob Hinweise für eine missbräuchliche Nutzung des Verfahrens vorliegen, und der Autorisations-Server (5) für diesen Fall eine Deaktivierungs-Nachricht an das Token (2) sendet, worauf das Token (2) dauerhaft deaktiviert wird.

12. Verfahren nach einem der vorangehenden Ansprüche, **dadurch gekennzeichnet, dass** die Aktion einen Service-Einsatz darstellt.

13. Anordnung zur Autorisierung einer Aktion an einem Selbstbedienungssystem (SB-System), wobei die Anordnung ein SB-System (1), ein Token (2) eines Benutzers (3), ein weiteres Gerät (4) und einen Autorisations-Server (5) umfasst,
**dadurch gekennzeichnet, dass**
- das SB-System (1) dazu eingerichtet ist, eine ersten Nachricht zu erzeugen, wenn der Benutzer (3) sich durch das Token (2) gegenüber dem SB-System (1) identifiziert hat, und die erste Nachricht auf dem Token (2) zu speichern, wobei die erste Nachricht Daten zur Identifikation des Benutzers (3) und des SB-Systems (1) enthält,
- das Token (2) dazu eingerichtet ist, die erste Nachricht über eine Kommunikationsverbindung (71) zu übertragen,
- der Autorisations-Server (5) dazu eingerichtet ist, die erste Nachricht über eine Kommunikationsverbindung (72) zu empfangen,
- der Autorisations-Server (5) ferner dazu eingerichtet ist, unter Berücksichtigung der ersten Nachricht zu prüfen, ob die Aktion durch den Benutzer (3) am SB-System (1) durchgeführt werden darf,
- der Autorisations-Server (5) ferner dazu eingerichtet ist, eine zweite Nachricht zu erzeugen und die zweite Nachricht über eine Kommunikationsverbindung (72) zu übertragen, wobei die zweite Nachricht Daten darüber enthält, ob die Aktion durch den Benutzer (3) am SB-System (1) durchgeführt werden darf, und
- das SB-System (1) ferner dazu eingerichtet ist, die zweite Nachricht zu lesen und eine Aktion zuzulassen, sofern die zweite Nachricht eine entsprechende Autorisierung enthält,
wobei das Token (2) zwei Schnittstellen (21, 22) aufweist, von denen eine erste Schnittstelle (21) zum Übertragen von Daten zwischen dem Token (2) und dem SB-System (1) und eine zweite Schnittstelle (22) zum Übertragen von Daten zwischen dem Token (2) und einem weiteren Gerät (4) eingerichtet ist, wobei der Token (2) dazu eingerichtet ist, die erste Nachricht über die zweite Schnittstelle (22) zu dem weiteren Gerät (4) zu übertragen, und wobei das weitere Gerät (4) dazu eingerichtet ist, die erste Nachricht auf den Autorisations-Server (5) zu übertragen.

14. Anordnung nach Anspruch 13, **dadurch gekennzeichnet, dass** die Anordnung des Weiteren ein Mobilfunkgerät (4) des Benutzers (3) umfasst, wobei
- das Token (2) dazu eingerichtet ist, die erste Nachricht zu dem Mobilfunkgerät (4) zu übertragen,
- das Mobilfunkgerät (4) dazu eingerichtet ist, die erste Nachricht zum Autorisations-Server (5) zu übertragen,
- der Autorisations-Server (5) dazu eingerichtet ist, die zweite Nachricht zum Mobilfunkgerät (4) zu übertragen, und
- das Mobilfunkgerät (4) ferner dazu eingerichtet ist, die zweite Nachricht zum Token (2) zu übertragen.

15. Anordnung nach einem der Ansprüche 13 oder 14, **dadurch gekennzeichnet, dass** die Aktion einen Service-Einsatz darstellt.

## Claims

1. Method for authorizing an action on a self-service system, in which a user (3) is authorized, by using an authorization server (5), to carry out an action on a self-service system (1), wherein the user (3) is equipped with a token (2) for his/her identification,
**characterized in that**
the method comprises the following steps:
- generation of a first message by the self-service system (1) when the user (3) has identified himself/herself to the self-service system (1) by means of the token (2), and storage of the first message on the token (2), wherein the first message contains data for identifying the user (3) and the self-service system (1), the generation of the first message by the self-service system (1) comprising the steps of:
inserting the token (2) into a token reader (11) of the self-service system (1), reading identification data of the token (2) via a first interface (21) of the token (2), and transmitting the first message from the self-service system (1) to the token (2) via the first interface (21),
- transmission of the first message from the token (2) via a second interface (22) to a further device (4), which transmits the first message to the authorization server (5),
- checking at the authorization server (5), taking the first message into consideration, whether the action by the user (3) on the self-service system (1) is permitted to be carried out,
- generation of a second message at the authorization server (5) and transmission of the second message from the authorization server (5) to the token (2), wherein the second message contains data about whether the action by the user (3) on the self-service system is permitted to be carried out,
- reading of the second message by the self-service system (1) and allowing of the action by the self-service system (1) if the second message contains a corresponding authorization.

2. Method according to Claim 1, **characterized in that** the first message is digitally signed by the self-service system (1).

3. Method according to either of the preceding claims, **characterized in that** the transmission of the first message from the token (2) to the authorization server (5) comprises the steps of:
- transmission of the first message from the token (2) to a mobile radio (4) of the user (3), and
- transmission of the first message from the mobile radio (4) to the authorization server (5).

4. Method according to Claim 3, **characterized in that** the transmission of the first message from the token (2) to the mobile radio (4) of the user is undertaken via the second interface (22) of the token (2).

5. Method according to Claim 4, **characterized in that** the second interface (22) of the token (2) is an NFC interface and the first message is transmitted to the mobile radio (4) using NFC technology.

6. Method according to one of the preceding claims, **characterized in that** prior to generation of the second message at the authorization server (5) the mobile radio (4) and the authorization server (5) and/or the token (2) and the authorization server (5) carry out a mutual authentication that comprises the input of a password assigned to the token (2) on the mobile radio (4) and/or on the self-service system.

7. Method according to one of the preceding claims, **characterized in that** the second message is cryptographically protected by the authorization server (5) .

8. Method according to one of the preceding claims, to the extent that it is dependent on Claim 3, **characterized in that** the transmission of the second message from the authorization server (5) to the token (2) comprises the steps of:
- transmission of the second message from the authorization server (5) to the mobile radio (4) of the user, and
- transmission of the second message from the mobile radio (4) of the user to the token (2).

9. Method according to one of the preceding claims, **characterized in that** the reading of the second message by the self-service system (1) comprises the insertion of the token (2) provided with the second message into a token reader (11) of the self-service system (1).

10. Method according to one of the preceding claims, **characterized in that** the token (2) contains an emergency password in addition to a regular password, and if said emergency password is communicated to the authorization server (5) by the user (3) then the authorization server (5) performs or brings about at least one additional measure.

11. Method according to one of the preceding claims, **characterized in that** the authorization server (5) checks whether there are indications of an improper use of the method, and if this is the case then the authorization server (5) sends a deactivation message to the token (2), whereupon the token (2) is permanently deactivated.

12. Method according to one of the preceding claims, **characterized in that** the action is a service operation.

13. Arrangement for authorizing an action on a self-service system, wherein the arrangement comprises a self-service system (1), a token (2) of a user (3), a further device (4) and an authorization server (5), **characterized in that**
- the self-service system (1) is designed to generate a first message when the user (3) has identified himself/herself to the self-service system (1) by means of the token (2), and to store the first message on the token (2), wherein the first message contains data for identifying the user (3) and the self-service system (1),
- the token (2) is designed to transmit the first message via a communication connection (71),
- the authorization server (5) is designed to receive the first message via a communication connection (72),
- the authorization server (5) is further designed to check, taking the first message into consideration, whether the action by the user (3) on the self-service system (1) is permitted to be carried out,
- the authorization server (5) is further designed to generate a second message and to transmit the second message via a communication connection (72), wherein the second message contains data about whether the action by the user (3) on the self-service system (1) is permitted to be carried out, and
- the self-service system (1) is further designed to read the second message and to allow an action if the second message contains a corresponding authorization, wherein the token (2) has two interfaces (21, 22), a first interface (21) of which is designed for transferring data between the token (2) and the self-service system (1) and a second interface (22) of which is designed for transferring data between the token (2) and a further device (4), the token (2) being designed to transmit the first message via the second interface (22) to the further device (4), and the further device (4) being designed to transmit the first message to the authorization server (5).

14. Arrangement according to Claim 13, **characterized in that** the arrangement moreover comprises a mobile radio (4) of the user (3), wherein
- the token (2) is designed to transmit the first message to the mobile radio (4),
- the mobile radio (4) is designed to transmit the first message to the authorization server (5),
- the authorization server (5) is designed to transmit the second message to the mobile radio (4), and
- the mobile radio (4) is further designed to transmit the second message to the token (2).

15. Arrangement according to either of Claims 13 and 14, **characterized in that** the action is a service operation.

## Revendications

1. Procédé permettant d'autoriser une action sur un système de libre service (système de LS), dans lequel un utilisateur (3) est autorisé, en utilisant un serveur d'autorisation (5), à effectuer une action sur un système de LS (1), l'utilisateur (3) étant muni d'un jeton (2) servant à son identification,
**caractérisé en ce que** le procédé comprend les étapes suivantes consistant à :
- générer un premier message par le système de LS (1) si l'utilisateur (3) s'est identifié auprès du système de LS (1) par le jeton (2), et stocker le premier message sur le jeton (2), le premier message contenant des données servant à l'identification de l'utilisateur (3) et du système de LS (1), la génération du premier message par le système de LS (1) comprenant les étapes consistant à : insérer le jeton (2) dans un lecteur de jeton (11) du système de LS (1), lire des données d'identification du jeton (2) par une première interface (21) du jeton (2), et transmettre le premier message du système de LS (1) au jeton (2) par la première interface (21),
- transmettre le premier message du jeton (2) par une deuxième interface (22) à un autre appareil (4) qui transmet le premier message au serveur d'autorisation (5),
- vérifier auprès du serveur d'autorisation (5), en tenant compte du premier message, si l'action peut être exécutée par l'utilisateur (3) sur le système de LS (1),
- générer un deuxième message auprès du serveur d'autorisation (5) et transmettre le deuxième message du serveur d'autorisation (5) au jeton (2), le deuxième message contenant des données indiquant si l'action peut être effectuée par l'utilisateur (3) sur le système de LS,
- lire le deuxième message par le système de LS (1) et permettre l'action par le système de LS (1) à condition que le deuxième message contienne une autorisation correspondante.

2. Procédé selon la revendication 1, **caractérisé en ce que** le premier message reçoit une signature numérique du système de LS (1).

3. Procédé selon l'une quelconque des revendications précédentes, **caractérisé en ce que** la transmission du premier message du jeton (2) au serveur d'autorisation (5) comprend les étapes consistant à :
- transmettre le premier message du jeton (2) à un téléphone mobile (4) de l'utilisateur (3), et
- transmettre le premier message du téléphone mobile (4) au serveur d'autorisation (5).

4. Procédé selon la revendication 3, **caractérisé en ce que** la transmission du premier message du jeton (2) au téléphone mobile (4) de l'utilisateur est effectuée par la deuxième interface (22) du jeton (2).

5. Procédé selon la revendication 4, **caractérisé en ce que** la deuxième interface (22) du jeton (2) est une interface NFC et le premier message est transmis au téléphone mobile (4) par une technologie NFC.

6. Procédé selon l'une quelconque des revendications précédentes, **caractérisé en ce qu'**avant la génération du deuxième message auprès du serveur d'autorisation (5), le téléphone mobile (4) et le serveur d'autorisation (5) et/ou le jeton (2) et le serveur d'autorisation (5) effectuent une autorisation mutuelle qui comprend la saisie d'un mot de passe associé au jeton (2) sur le téléphone mobile (4) et/ou sur le système de LS.

7. Procédé selon l'une quelconque des revendications précédentes, **caractérisé en ce que** le deuxième message est protégé de manière cryptographique par le serveur d'autorisation (5).

8. Procédé selon l'une quelconque des revendications précédentes dépendant de la revendication 3, **caractérisé en ce que** la transmission du deuxième message du serveur d'autorisation (5) au jeton (2) comprend les étapes consistant à :
- transmettre le deuxième message du serveur d'autorisation (5) au téléphone mobile (4) de l'utilisateur, et
- transmettre le deuxième message du téléphone mobile (4) de l'utilisateur au jeton (2).

9. Procédé selon l'une quelconque des revendications précédentes, **caractérisé en ce que** la lecture du deuxième message par le système de LS (1) comprend l'insertion du jeton (2) muni du deuxième message dans un lecteur de jeton (11) du système de LS (1).

10. Procédé selon l'une quelconque des revendications précédentes, **caractérisé en ce que** le jeton (2) contient en plus d'un mot de passe ordinaire un mot de passe de secours, et si celui-ci est communiqué au serveur d'autorisation (5) par l'utilisateur (3), le serveur d'autorisation (5) effectue ou provoque au moins une mesure supplémentaire.

11. Procédé selon l'une quelconque des revendications précédentes, **caractérisé en ce que** le serveur d'autorisation (5) vérifie si des indications quant à une utilisation frauduleuse du procédé existent, et le serveur d'autorisation (5) envoie dans ce cas un message de désactivation au jeton (2) suite à quoi le jeton (2) est désactivé de façon permanente.

12. Procédé selon l'une quelconque des revendications précédentes, **caractérisé en ce que** l'action est une intervention de maintenance.

13. Agencement permettant d'autoriser une action sur un système de libre service (système de LS), l'agencement comprenant un système de LS (1), un jeton (2) d'un utilisateur (3), un autre appareil (4) et un serveur d'autorisation (5), **caractérisé en ce que**
- le système de LS (1) est aménagé pour générer un premier message lorsque l'utilisateur (3) s'est identifié par le jeton (2) auprès du système de LS (1), et pour stocker le premier message sur le jeton (2), le premier message contenant des données servant à l'identification de l'utilisateur (3) et du système de LS (1),
- le jeton (2) est aménagé pour transmettre le premier message par une liaison de communication (71),
- le serveur d'autorisation (5) est aménagé pour recevoir le premier message par une liaison de communication (72),
- le serveur d'autorisation (5) est en outre aménagé pour vérifier, en tenant compte du premier message, si l'action peut être effectuée par l'utilisateur (3) sur le système de LS (1),
- le serveur d'autorisation (5) est en outre aménagé pour générer un deuxième message et pour transmettre le deuxième message par une liaison de communication (72), le deuxième message contenant des données indiquant si l'action peut être effectuée par l'utilisateur (3) sur le système de LS (1), et
- le système de LS (1) est en outre aménagé pour lire le deuxième message et pour permettre une action à condition que le deuxième message contienne une autorisation correspondante,
le jeton (2) présentant deux interfaces (21, 22) dont une première interface (21) est aménagée pour transmettre des données entre le jeton (2) et le système de LS (1) et une deuxième interface (22) est aménagée pour transmettre des données entre le jeton (2) et un autre appareil (4), le jeton (2) étant aménagé pour transmettre le premier message par la deuxième interface (22) à l'autre appareil (4), et l'autre appareil (4) étant aménagé pour transmettre le premier message au serveur d'autorisation (5).

14. Agencement selon la revendication 13, **caractérisé en ce que** l'agencement comprend en outre un téléphone mobile (4) de l'utilisateur (3), dans lequel
- le jeton (2) est aménagé pour transmettre le premier message au téléphone mobile (4),
- le téléphone mobile (4) est aménagé pour transmettre le premier message au serveur d'autorisation (5),
- le serveur d'autorisation (5) est aménagé pour transmettre le deuxième message au téléphone mobile (4), et
- le téléphone mobile (4) est en outre aménagé pour transmettre le deuxième message au jeton (2).

15. Agencement selon l'une quelconque des revendications 13 ou 14, **caractérisé en ce que** l'action est une intervention de maintenance.
